# EUROPÄISCHE PATENTSCHRIFT

(11) **EP 1 560 637 B1**
(45) Veröffentlichungstag und Bekanntmachung des Hinweises auf die Patenterteilung: **09.04.2008**
(21) Anmeldenummer: 03810387.5
(22) Anmeldetag: 21.07.2003
(51) Int. Cl.: B01D 61/06, C02F 1/44, F04B 9/115, F04B 11/00, F04F 11/02, F15B 3/00

(54) **VERFAHREN UND VORRICHTUNG ZUM ENTSALZEN VON WASSER MIT DRUCKABFALLÜBERBRÜCKUNG**
METHOD AND DEVICE FOR DESALINATING WATER WHILE OVERCOMING DECREASES IN PRESSURE
PROCEDE ET DISPOSITIF POUR DESSALER L'EAU DANS LEQUEL UNE CHUTE DE PRESSION EST EVITEE

(30) Priorität: 05.11.2002 DE 10251342
(43) Veröffentlichungstag der Anmeldung: 10.08.2005
(73) Patentinhaber: Wobben, Aloys, 26607 Aurich (DE)
(72) Erfinder: Wobben, Aloys, 26607 Aurich (DE)
(74) Vertreter: Eisenführ, Speiser & Partner
(86) Internationale Anmeldenummer: PCT/EP2003/007916
(87) Internationale Veröffentlichungsnummer: WO 2004/041418

(56) Entgegenhaltungen:
- EP-A- 0 018 128
- EP-A- 0 055 981
- WO-A-00/76639
- WO-A-02/41979
- FR-A- 2 568 321
- US-A- 4 187 173

## Beschreibung

Die Erfindung betrifft ein Verfahren sowie eine korrespondierende Vorrichtung zum kontinuierlichen Entsalzen von Wasser durch Umkehrosmose, insbesondere zum Entsalzen von Meerwasser.

Eine derartige Vorrichtung ist beispielsweise in der WO 02/41979 A1 beschrieben. Dabei wird das Salzwasser unter einem ersten Druck in eine Druckausgleichsvorrichtung eingeleitet und von dort unter einem zweiten, höheren Druck in ein Membranmodul geleitet. In dem Membranmodul erfolgt die Trennung in entsalztes Wasser und konzentriertes Salzwasser. Das ausgeleitete konzentrierte Salzwasser, das etwa noch den zweiten Druck aufweist, wird wieder in die Druckausgleichsvorrichtung kontinuierlich eingeleitet und dort zur Beaufschlagung des in die Druckausgleichsvorrichtung eingeleiteten Salzwassers mit etwa dem zweiten Druck und zur Einleitung des Salzwassers in das Membranmodul benutzt. Speziell weist die darin beschriebene Druckausgleichsvorrichtung zwei gegenphasig arbeitende Kolben/Zylinder-Vorrichtungen auf, deren Kolben durch eine zusätzlich angetriebene Kolbenstange fest miteinander verbunden sind.

Bei derartigen nach dem Prinzip der Umkehrosmose arbeitenden Entsalzungsanlagen erfolgt die Trennung in konzentriertes Salzwasser und entsalztes Wasser an einer in dem Membranmodul befindlichen sogenannten "Crossflow"-Membran. Bei einer solchen Membran fließt das eingeleitete Salzwasser auf der Oberfläche der Membran entlang, während ein Teil davon als entsalztes Wasser (Trinkwasser) in einer Richtung senkrecht dazu durch die Membran hindurchtritt. Diese sich kreuzenden Wasserströmungen werden auch als "Crossflow" bezeichnet. Die Strömung auf der Membranoberfläche spült dabei auch unerwünschte Fremdkörper auf der Membranoberfläche fort und bewirkt somit also eine kontinuierliche Reinigung der Membran.

Bei der bekannten Ausgestaltung der Entsalzungsvorrichtung mit zwei Kolben-/Zylinder Vorrichtungen ist zwar im Moment der Umschaltung der Bewegungsrichtung der Kolben ein ausreichend hoher Druck vorhanden, um weiter Wasser durch die Membran zu pressen und damit entsalztes Wasser zu erzeugen. Allerdings ist festgestellt worden, dass der "Crossflow" im Umschaltmoment zusammenbricht. Dadurch wird die Membran in diesem Moment nicht mehr ausreichend gespült, so dass es zu einer Aufkonzentrierung von Salzmolekülen auf der Membranoberfläche kommen kann, die zu einem Anstieg des osmotischen Drucks und damit des Betriebsdrucks bis hin zur Ausbildung einer Salzkruste auf der Membranoberfläche und einer dauerhaften Betriebsunterbrechung führen kann.

Aus der US 4,187,173 und der EP 0 018 128 A1 sind ein Verfahren und eine Vorrichtung zum Entsalzen von Wasser nach der Umkehrosmose, wobei sowohl im Speisewasserkreis als auch - bei der US 4,187,173 - im Konzentratkreis jeweils ein Druckausgleichsbehälter vorgesehen ist. Diese Druckausgleichsbehälter sind dort als Pulsationsdämpfer bzw. Differenzialdruckdämpfer ausgestaltet, bei denen ein Kolben in einem Zylinder verfahrbar ist und den Innenraum des Zylinders in zwei Kammern unterteilt. Zum Ausleiten von in einer Kammer befindlichem Speisewasser ist dort vorgesehen, dass auf den Kolben Druck ausgeübt wird mittels in die zweite Kammer eingeleiteten Konzentrats und einer in dieser Kammer befindlichen Springfeder.

Aus der FR 2 568 321 und der EP 0 055 981 A1 sind weitere Vorrichtungen und Verfahren für die Umkehrosmose bekannt.

Der Erfindung liegt deshalb die Aufgabe zugrunde, bei den bekannten Verfahren und Vorrichtungen zum kontinuierlichen Entsalzen von Wasser durch Umkehrosmose, die mit einem beschriebenen Membranmodul arbeiten, Maßnahmen zur Vermeidung der beschriebenen Probleme vorzusehen.

Diese Aufgabe wird erfindungsgemäß gelöst durch ein Verfahren gemäß Anspruch 1.

Eine entsprechende Vorrichtung zur Lösung der beschriebenen Probleme ist in Anspruch 4 angegeben. Vorteilhafte Ausgestaltungen des erfindungsgemäßen Verfahrens bzw. der erfindungsgemäßen Vorrichtung sind in den Unteransprüchen angegeben.

Der Erfindung liegt dabei die Erkenntnis zugrunde, dass die beschriebenen Probleme, insbesondere eine Betriebsunterbrechung aufgrund einer Verschmutzung der Membranoberfläche oder gar einer Beschädigung der Membran, vermieden werden können, indem die Strömung über die Membran durch geeignete Mittel kontinuierlich aufrechterhalten wird. Dazu wird erfindungsgemäß ein Speicher vorgesehen, der auf das in das Membranmodul eingeleitete Salzwasser einwirkt und zur Aufrechterhaltung der Strömung über die Membran zusätzlich Wasser, insbesondere Salzwasser, in das Membranmodul einleitet.

Erfindungsgemäß ist ferner eine Kolben-/Zylinder-Vorrichtung vorgesehen, die einen Kolben aufweist, der den Zylinderinnenraum in drei Kammern unterteilt, wobei in eine Eingangskammer das aus der Druckausgleichsvorrichtung ausströmende Salzwasser, in einer Ausgangskammer das aus der Membranvorrichtung ausströmende konzentrierte Salzwasser und in einer Druckkammer ein in einem Druckspeicher gespeichertes Medium, z.B. ebenfalls Wasser oder eine Hydraulikflüssigkeit, unter einem hohen Druck vorhanden ist. Die gewünschte Aufrechterhaltung der Strömung durch Ausleitung von Wasser aus dem Speicher stellt sich dabei vorzugsweise von selbst ein. Es kann aber auch eine entsprechende Steuereinrichtung zur Steuerung der Kolben-/Zylinder-Vorrichtung vorgesehen sein, um die gewünschte Druckunterstützung zu bewirken.

Bevorzugte Ausgestaltungen dieser Kolben-/Zylinder-Vorrichtung sind in den Ansprüchen 6 und 7 angegeben.

Bevorzugt ist vorgesehen, dass, beispielsweise im Umschaltmoment bei der bekannten Vorrichtung mit zwei Kolben-/Zylinder-Vorrichtungen, ein Druckabfall oder Strömungsabfall überbrückt wird, um die kontinuierliche Strömung über die Membran aufrechtzuerhalten. Beispielsweise können entsprechende Sensoren zur Messung einer Verringerung der Strömung über die Membran vorgesehen sein.

Bevorzugt sind erfindungsgemäß zwei gegenphasig arbeitende Kolben-/Zylinder-Vorrichtungen vorgesehen, wie sie aus der WO 02/41979 A1 bekannt sind. Der Speicher bewirkt dann, dass bei Änderung der Bewegungsrichtung der Kolben, also insbesondere im Moment des Stillstandes der Kolben, ein Unterstützungsdruck auf das Salzwasser ausgeübt wird. So wird insbesondere in diesem Umschaltmoment ein eventueller Druckabfall ausgeglichen und die Strömung über die Membran aufrechterhalten.

Eine weitere vorteilhafte Ausgestaltung ist in Anspruch 3 vorgesehen. Dabei wird der zum Ausleiten des Wassers aus dem Speicher erforderliche Druck erzeugt einerseits aus dem Druck des aus dem Membranmodul ausgeleiteten konzentrierten Salzwassers und zusätzlich aus einem in einem Druckspeicher gespeicherten Druck, wobei der sich insgesamt ergebende Druck natürlich im Bedarfsfall größer sein muss als der Druck, den das aus der Druckausgleichsvorrichtung ausströmende Salzwasser aufweist.

Die Erfindung wird nachfolgend anhand der Zeichnungen näher erläutert. Es zeigen:
- Fig. 1: ein Blockschaltbild zur Erläuterung des erfindungsgemäßen Verfahrens und
- Fig. 2: eine Ausführungsform einer erfindungsgemäßen Vorrichtung.

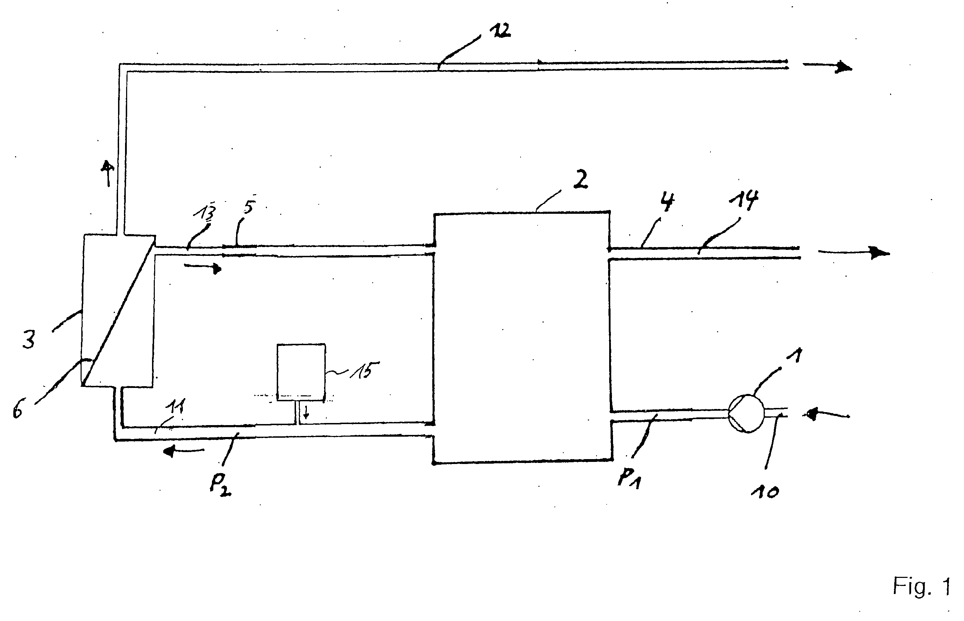

Das Blockschaltbild in Fig. 1 zeigt eine Förderpumpe 1 zum Einleiten von Salzwasser 10 in eine Druckausgleichsvorrichtung 2 unter einem ersten Druck p1. Aus der Druckausgleichsvorrichtung 2 wird dasselbe Salzwasser 11, das jedoch nun mit einem hohen Arbeitsdruck p2 beaufschlagt ist, dem Membranmodul 3 zugeleitet. Dort tritt ein Teil des Salzwassers 11 durch die Membran 6, die vorzugsweise als sogenannte "Crossflow"-Membran ausgestaltet ist, hindurch, beispielsweise 25% des Salzwassers 11, wird dabei entsalzt und als entsalztes Wasser 12 abgeleitet. Der restliche Teil des Salzwassers 11, z.B. 75%, kann die Membran 6 nicht durchtreten, sondern strömt entlang der Oberfläche der Membran 6 in die Verbindungsleitung 5, über die es als konzentriertes Salzwasser 13 aus dem Membranmodul 3 ausgeleitet wird. Das konzentrierte Salzwasser 13, das dabei immer noch einen hohen Druck aufweist, der etwa dem Druck p2 entspricht, aber etwas niedriger ist, wird dann der Druckausgleichsvorrichtung 2 wieder zugeleitet. Dort wird dieser hohe Druck p2 in noch näher zu erläuternder Weise dazu ausgenutzt, das in die Druckausgleichsvorrichtung 2 eingeleitete Salzwasser mit Druck zu beaufschlagen und dem Membranmodul 3 an dessen Eingang zuzuleiten. Gleichzeitig wird dieser Druck in der Druckausgleichsvorrichtung dazu genutzt, darin befindliches konzentriertes Salzwasser 14 über die Ableitung 4 endgültig abzuleiten und der Druckausgleichsvorrichtung 2 unkonzentriertes Salzwasser 10 zuzuführen. Alle beschriebenen Vorgänge erfolgen dabei gleichzeitig und kontinuierlich, so dass eine den hohen Arbeitsdruck nachliefernde Hochdruckpumpe nicht erforderlich ist und entsalztes Wasser 12 kontinuierlich zur Verfügung steht.

Wie eingangs beschrieben wurde, ist es insbesondere bei Verwendung einer "Crossflow"-Membran 6 erforderlich, die Strömung des Salzwassers über die Membranoberfläche kontinuierlich und unter gleichmäßig hohem Druck aufrechtzuerhalten, da sich ansonsten Salzmoleküle an der Membranoberfläche ablagern können, die zu einer Beschädigung der Membran oder einer Betriebsunterbrechung führen können. Aufgrund verschiedener Umstände kann es jedoch vorkommen, dass der Druck p2 des aus der Druckausgleichsvorrichtung 2 ausgeleiteten Salzwassers kurzzeitig so stark absinkt, dass die Strömung über die Membranoberfläche verringert oder gar unterbrochen würde. Die Entsalzung würde dann zwar immer noch stattfinden; allerdings könnte die Membran beschädigt werden, da das konzentrierte Salzwasser 13 nicht aus dem Membranmodul 3 abfließen kann. Um in einem solchen Fall den Druck p2 und die Strömung aufrechtzuerhalten, ist deshalb erfindungsgemäß ein Speicher 15 vorgesehen, der in einem solchen Fall zusätzliches Wasser in das Membranmodul 3 leitet und somit gewährleistet, dass der hohe Arbeitsdruck p2 aufrechterhalten bleibt und die Strömung über die Membranoberfläche nicht verringert wird.

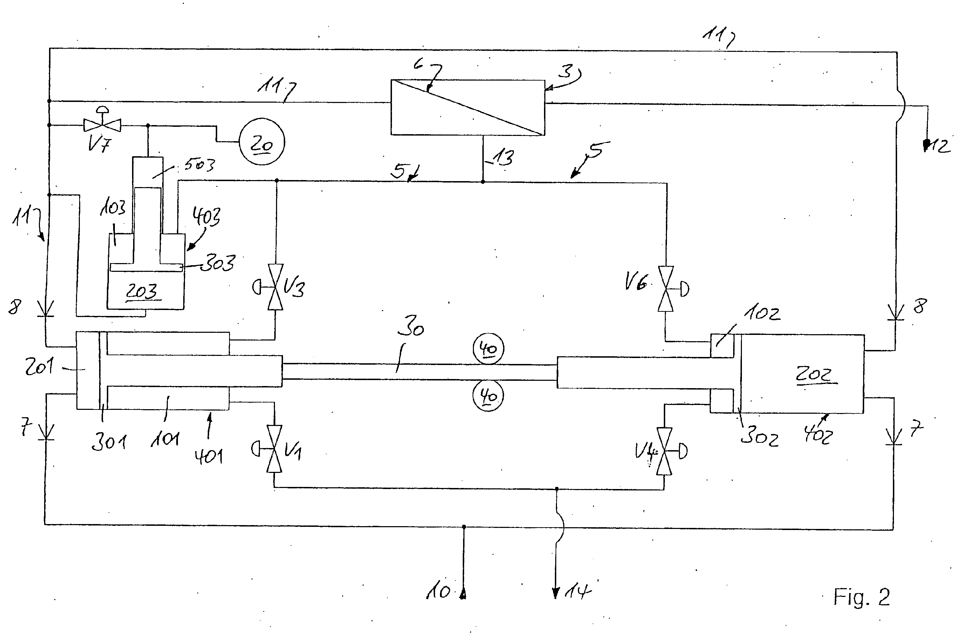

Fig. 2 zeigt eine konkrete Ausgestaltung einer erfindungsgemäßen Vorrichtung. Diese weist zwei identische Kolben/Zylinder-Vorrichtungen 401, 402 mit zwei sich fluchtend gegenüberliegend angeordneten Zylindern auf, die jeweils eine Eingangskammer 201, 202 zur Aufnahme des Salzwassers und jeweils eine Ausgangskammer 101, 102 zur Aufnahme des konzentrierten Salzwassers 13 aufweisen. Innerhalb der Kolben/Zylinder-Vorrichtungen 401, 402 ist jeweils ein spezieller Kolben 301, 302 angeordnet, der den Kolbeninnenraum in die genannten Kammern unterteilt und der im Bild in horizontaler Richtung innerhalb der Kolben/Zylinder-Vorrichtung verfahrbar ist.

Von der Förderpumpe 1 führt jeweils eine Zuleitung mit einem (passiven) Rückschlagventil 7 zu den Eingangskammern 201, 202. Die Rückschlagventile 7 sind dabei derart ausgestaltet, dass sie sich öffnen und einen Durchfluss ermöglichen, wenn der Druck in der Zuleitung größer ist als in den Eingangskammern 201, 202. Vergleichbare Rückschlagventile 8, die jedoch eine andere Durchflussrichtung aufweisen, finden sich in den Zuleitungen von den Eingangskammern 201, 202 zu dem Membranmodul 3.

In den Zuleitungen 5 vom Membranmodul 3 zu den Ausgangskammern 101, 102 und in den Ableitungen 4 von den Ausgangskammern 101, 102 sind dagegen aktiv schaltbare Hauptventile V3, V6 bzw. V1, V4 angeordnet, über die der Zufluss des konzentrierten Salzwassers 13 vom Membranmodul 3 bzw. der Abfluss des konzentrierten Salzwassers 14 aus der Druckausgleichsvorrichtung 2 gesteuert werden kann.

Die Kolben 301, 302 sind mittels einer Kolbenstange 30 fest miteinander verbunden. Ritzel 40, die z. B. durch elektrische Getriebemotoren angetrieben werden können und in eine an der Kolbenstange 30 angebrachte Verzahnung eingreifen, können die Kolbenstange 30 und darüber die Kolben 301, 302 antreiben, um Druckverluste auszugleichen.

Die Kolben sind so angeordnet, dass sie gegenphasig arbeiten. Befindet sich also ein Kolben in einer Stellung, in welcher das Volumen der Eingangskammer 202 maximal und das Volumen der Ausgangskammer 102 minimal ist, so befindet sich der andere, über die Kolbenstange 30 verbundene Kolben in einer Stellung, in welcher das Volumen der Eingangskammer 201 minimal und das Volumen der Ausgangskammer 101 maximal ist (vgl. Figur 2). In dieser Situation ist die Eingangskammer 202 mit Wasser gefüllt und die Ausgangskammer 101 ist mit konzentriertem Salzwasser gefüllt. Die Ventile V1, V3, V4 und V6, die hier als Schalter dargestellt sind, werden so gesteuert, dass nun V3 und V4 geschlossen werden, während V1 und V6 geöffnet werden.

Ein Öffnen eines Ventils bedeutet in diesem Zusammenhang das Herstellen einer Strömungsverbindung, um einen Durchfluss zuzulassen, wozu das Ventil rein mechanisch dazu geöffnet wird. Analog bedeutet das Schließen eines Ventils das Unterbrechen einer Strömungsverbindung, um einen Durchfluss zu unterbinden, wozu rein mechanisch das Ventil dazu geschlossen wird.

Durch das Öffnen des Hauptventils V1 entweicht zunächst der Druck des konzentrierten Salzwassers in der Ausgangskammer 101. Durch das Öffnen des Hauptventils V6 wird die Ausgangskammer 102 mit Druck (beispielsweise ca. 65 bar) beaufschlagt und das konzentrierte Salzwasser strömt in diese Kammer ein. Gleichzeitig wird durch den Druck beaufschlagten Kolben das in der Eingangskammer 202 befindliche Salzwasser zum Membranmodul 3 gepresst.

Da die Kolben so angeordnet sind, dass sie gegenphasig arbeiten, bewirkt das Einleiten des (mit beispielsweise 65 bar) Druck beaufschlagten Konzentrats in die Ausgangskammer 102 durch die Kolbenstange 30 eine Bewegung des anderen Kolbens 301, der dadurch die drucklose Ausgangskammer 101 leert. Gleichzeitig entsteht in der Eingangskammer 201 ein Unterdruck, der Salzwasser ansaugt und diese Kammer füllt.

Ist die Ausgangskammer 102 gefüllt, werden die Hauptventile entsprechend gesteuert und der entgegengesetzte Vorgang läuft ab.

Da das Membranmodul bevorzugt mit ca. 70 bar betrieben wird, um eine ausreichend hohe Süßwassererzeugung zu verwirklichen, und maximal ca. 5-10 bar als Druckverlust an der Membran auftreten, stehen am Konzentratabfluss 5 des Membranmoduls 3 mindestens noch die oben genannten ca. 65 bar Druck des konzentrierten Salzwassers zur Verfügung.

Um die Strömung des Wassers entlang der Membranoberfläche der Membran 6 während der Umschaltung der Bewegungsrichtung der Kolben 301, 302, insbesondere im Moment des Stillstands der Kolben 301, 302, aufrechtzuerhalten, ist erfindungsgemäß eine zusätzliche Kolben/Zylinder-Vorrichtung 403, nachfolgend als Kolbenspeicher bezeichnet, vorgesehen. Dieser weist drei Kammern auf, nämlich eine Speisewasserkammer (Eingangskammer) 203, die mit der Zuführungsleitung für das eingespeiste Salzwasser 11 verbunden ist, eine mit der Konzentratleitung 5 verbundene Konzentratkammer (Ausgangskammer) 103 und eine Druckkammer 503. Die Druckkammer 503 ist dabei einerseits über ein aktives Ventil V7 mit der Zuleitung 11 verbunden und andererseits direkt mit einem Druckspeicher 20, bevorzugt einem Blasenspeicher. Während des Betriebs ist das Ventil V7 stets geschlossen, es dient lediglich dazu, den aus der Druckkammer 503 und dem Druckspeicher 20 bestehenden Kreis nach einer Betriebsunterbrechung wieder mit der Druckflüssigkeit, z.B. einer Hydraulikflüssigkeit, auffüllen zu können und den erforderlichen hohen Druck in dem Druckspeicher 20 wieder herzustellen.

Wenn die wirksame Kolbenfläche des Kolbens 303 in der Konzentratkammer 103 etwa drei Viertel der Kolbenfläche in der Speisewasserkammer 203 beträgt und die Kolbenoberfläche in der Druckkammer 503 etwa ein Viertel dieser Fläche beträgt, ergeben sich folgende Druckverteilungen. Die Speisewasserkammer 203 wird im Betrieb mit etwa 70 bar beaufschlagt. Daraus ergeben sich in dem Kreis aus Druckkammer 104 und Druckspeicher 20 bis zu 280 bar. Diese werden jedoch im Betrieb nicht erreicht. Der Betriebsdruck in diesem Bereich liegt bei etwa 200 bis 210 bar.

Im Umschaltmoment der Bewegungsrichtung der Kolben 301, 302 wirkt von der Speisewasserkammer 203 ein Druck von etwa 70 bar auf den Kolben 303. Der Druck in dem Speicher 20 betrage lediglich 160 bar. Dann wirkt von hier aus wegen der kleineren Kolbenfläche in der Druckkammer 503 ein Druck von etwa 160/4, also etwa 40 bar. Der Druck im Konzentratkreis, also der Druck des aus dem Membranmodul 3 ausgeleiteten konzentrierten Salzwassers 13 betrage etwa 68 bar. Dieser Druck wirkt auf eine Fläche, die drei Viertel der Kolbenoberfläche umfasst. Folglich wirkt hier ein Druck von etwa 51 bar. Diese beiden Drücke wirken in der gleichen Richtung und addieren sich somit zu insgesamt etwa 91 bar. Diesem resultierenden Druck wirken lediglich die etwa 70 bar in der Speisewasserkammer 203 entgegen. Somit ist ein ausreichend hoher Druck vorhanden, um den Kolben 303, in der dargestellten Lage abwärts, zu pressen und somit die Strömung über die Membran 6 aufrechtzuerhalten.

Selbst wenn für den Konzentratkreis nur ein Druck von etwa 60 bar zugrunde gelegt wird, ergibt sich daraus immer noch ein Anteil von 45 bar in der Konzentratkammer 103. Auch wenn der Druck in dem Druckspeicher 20 lediglich 120 bar beträgt, resultieren hieraus weitere 30 bar, so dass sich immer noch ein Gesamtdruck von 75 bar ergibt, der eine Aufrechterhaltung der Strömung über die Membran 6 erlaubt.

Der Kolbenspeicher 403 kann so gesteuert werden, dass nur im Falle eines Druckabfalls in der Verbindungsleitung zwischen den Eingangskammern 201, 202 und dem Membranmodul 3 bzw. einer Verringerung der Strömung über der Membran 6 ein zusätzlicher Druck auf die genannte Verbindungsleitung ausgeübt wird. Dazu können beispielsweise geeignete Sensoren vorgesehen werden, die einen solchen Druckabfall bzw. eine Strömungsverringerung feststellen und die entsprechende Drucksteüerung auslösen. Weiter können dazu geeignet gesteuerte Ventile in der Konzentratleitung 5 zwischen dem Membranmodul 3 und der Kolben/Zylinder-Vorrichtung 403 vorgesehen sein, die im Bedarfsfall geöffnet werden, um durch Einleitung eines Drucks in die Konzentratkammer 103 die beschriebene Bewegung des Kolbens 303 nach unten zu bewirken. Wenn eine solche Druckunterstützung dagegen nicht benötigt wird, kann ein solches Ventil auch wieder geschlossen werden, so dass aufgrund des größeren Drucks in der Speisewasserkammer 203 gegenüber der Druckkammer 503 der Kolben 303 wieder nach oben bewegt wird und dort quasi in Bereitschaftshaltung verbleibt.

Bei dem erfindungsgemäßen Kolbenspeicher 403 kann eine solche Steuerung jedoch entfallen, da sie die genannten Druckverhältnisse automatisch im Betrieb einstellen kann und die gewünschte Wirkung durch gesonderte Steuerung erzielt wird. Einerseits kann dann Speisewasser aus der Kammer 203 und andererseits Konzentrat aus dem Membranmodul 3 in die Kammer 103 fließen, so dass die Strömung über die Membran 6 aufrecht erhalten bleibt.

Darüber hinaus können zusätzlich auch Neben- oder Bypass-Ventile parallel zu den beschriebenen Hauptventilen V1, V3, V4, V6 vorgesehen sein, um die Belastung der Hauptventile zu verringern und damit deren Lebensdauer zu erhöhen. Außerdem können auch ein oder mehrere Durchflussmengenbegrenzer vorgesehen sein, die einen abrupten Druckausgleich verhindern sollen, indem sie die maximale Durchflussmenge begrenzen und somit zu einem allmählichen Druckausgleich und zu langsamen Druckänderungen anstelle schlagartiger Druckschwankungen beitragen. Derartige und weitere Elemente sind in der bereits genannten WO 02/41979 A1 gezeigt und erläutert. Auch die grundsätzliche Betriebsweise einer derartigen Vorrichtung mit zwei Kolben/Zylinder-Vorrichtungen ist dort eingehend erläutert.

Die Erfindung kann darüber hinaus auch bei anders ausgestalteten Vorrichtungen zum Entsalzen von Wasser durch Umkehrosmose eingesetzt werden, die beispielsweise statt der gezeigten zwei Kolben/Zylinder-Vorrichtungen eine andere Anzahl derartiger Vorrichtungen, z.B. eine oder drei Kolben/Zylinder-Vorrichtungen aufweist. Diese können grundsätzlich auch anders ausgestaltet sein.

## Patentansprüche

1. Verfahren zum kontinuierlichen Entsalzen von Wasser durch Umkehrosmose, insbesondere zum Entsalzen von Meerwasser, wobei
- Salzwasser (10) unter einem ersten Druck (p1) mittels einer Förderpumpe (1) in eine eine Kolben-/Zylindervorrichtung aufweisende Druckausgleichsvorrichtung (2) eingeleitet wird,
- Salzwasser (11) von der Druckausgleichsvorrichtung (2) mit einem zweiten, erhöhten Druck (p2) kontinuierlich in ein Membranmodul (3) eingeleitet und dort mittels einer Membran (6) in entsalztes Wasser (12) und konzentriertes Salzwasser (13) getrennt wird,
- das aus dem Membranmodul (3) ausgeleitete konzentrierte Salzwasser (13) unter etwa dem zweiten Druck (p2) kontinuierlich in die Druckausgleichsvor richtung (2) eingeleitet und dort zur Beaufschlagung des in die Druckausgleichsvorrichtung (2) eingeleiteten Salzwassers (10) mit etwa dem zweiten Druck (p2) und zur Einleitung des Salzwassers (11) in das Membranmodul (3) benutzt wird, und
- eine kontinuierliche Strömung des in das Membranmodul (3) eingeleiteten Salzwassers (11) über die Membranoberfläche der Membran (6) mittels aus einem Speicher (15; 403, 20) ausgeleitetem Salzwasser aufrechterhalten wird,
**dadurch gekennzeichnet, dass** der Speicher (15; 403; 20) einen Kolbenspeicher (403) mit einem Kolben (303) aufweist, wobei an der Kolbenvorderseite eine mit dem Salzwasserausgang der Druckausgleichsvorrichtung (2) und dem Salzwassereingang des Membranmoduls (3) verbundene Eingangskammer (203) und an der Kolbenrückseite eine mit dem Ausgang des konzentrierten Salzwassers (13) des Membranmoduls (3) verbundene Ausgangskammer (103) sowie eine mit einem Druckspeicher (20) verbundene Druckkammer (503) aufweist, und dass die Flächenverhältnisse der Kolbenrückseite und der Druck des Druckspeichers (20) derart eingestellt sind, dass zu vorgegebenen Zeitpunkten ein Druck in der Eingangskammer (203) erzeugt wird, welcher größer ist als der zweite Druck (p2) des aus der Druckausgleichsvorrichtung (2) ausgeleiteten Salzwassers (11).

2. Verfahren nach Anspruch 1,
**dadurch gekennzeichnet, dass** die Druckausgleichsvorrichtung (2) zwei gegenphasig arbeitende Kolben-/Zylinder-Vorrichtungen (401, 402) mit jeweils einem Kolben (301, 302) aufweist und dass der Speicher (15; 403; 20) bei Änderung der Bewegungsrichtung der Kolben (301, 302) Wasser aus dem Speicher (15; 403; 20) in das Membranmodul (3) leitet.

3. Verfahren nach Anspruch 1 oder 2,
**dadurch gekennzeichnet, dass** der Druck zum Ausleiten des Wassers aus dem Speicher (15; 403; 20) durch Kombination des in etwa zweiten Drucks (p2) des aus dem Membranmodul (3) ausgeleiteten konzentrierten Salzwassers (13) und eines Unterstützungsdrucks aus einem Druckspeicher (20) erzeugt wird.

4. Vorrichtung zum kontinuierlichen Entsalzen von Wasser durch Umkehrosmose, insbesondere zum Entsalzen von Meerwasser, mit
- einer Förderpumpe (1) zum Einleiten von Salzwasser (10) unter einem ersten Druck (p1) in eine Druckausgleichsvorrichtung (2),
- einem Membranmodul (3) zum Trennen von eingeleitetem Salzwasser (11) in entsalztes Wasser (12) und konzentriertes Salzwasser (13),
- einer eine Kolben-/Zylindervorrichtung aufweisende Druckausgleichsvor richtung (2) zum kontinuierlichen Zuführen des Salzwasser (11) unter einem zweiten, erhöhten Druck (p2) in das Membranmodul (3) und zum Abführen des konzentrierten Salzwassers (13), und
- einem Speicher (15; 403, 20) zur Aufrechterhaltung einer kontinuierlichen Strömung des in das Membranmodul (3) eingeleiteten Salzwassers (11) über die Membranoberfläche der Membran (6) durch Ausleiten von Wasser aus dem Speicher (15; 403; 20) in das Membranmodul (3),
**dadurch gekennzeichnet, dass** der Speicher (15; 403; 20) einen Kolbenspeicher (403) mit einem Kolben (303) aufweist, wobei an der Kolbenvorderseite eine mit dem Salzwasserausgang der Druckausgleichsvorrichtung (2) und dem Salzwassereingang des Membranmoduls (3) verbundene Eingangskammer (203) und an der Kolbenrückseite eine mit dem Ausgang des konzentrierten Salzwassers (13) des Membranmoduls (3) verbundene Ausgangskammer (103) sowie eine mit einem Druckspeicher (20) verbundene Druckkammer (503) aufweist, und dass die Flächenverhältnisse der Kolbenrückseite und der Druck des Druckspeichers (20) derart eingestellt sind, dass zu vorgegebenen Zeitpunkten ein Druck in der Eingangskammer (203) erzeugt wird, welcher größer ist als der zweite Druck (p2) des aus der Druckausgleichsvorrichtung (2) ausgeleiteten Salzwassers (11).

5. Vorrichtung nach Anspruch 4,
**dadurch gekennzeichnet, dass** die Druckausgleichsvorrichtung (2) zwei gegenphasig arbeitende Kolben-/Zylinder-Vorrichtungen (401, 402) mit jeweils einem Kolben (301, 302) aufweist und dass der Speicher (15; 403; 20) bei Änderung der Bewegungsrichtung der Kolben (301, 302) Wasser aus dem Speicher (15; 403; 20) in das Membranmodul (3) leitet.

6. Vorrichtung nach Anspruch 4 oder 5,
**dadurch gekennzeichnet, dass** der Kolben (303) derart ausgestaltet ist, dass der in der Druckkammer (503) herrschende Druck auf etwa ein Viertel der Fläche der Kolbenrückseite und der in der Ausgangskammer (103) herrschende Druck in etwa auf drei Viertel der Fläche der Kolbenrückseite einwirken kann.

7. Vorrichtung nach Anspruch 4, 5 oder 6,
**dadurch gekennzeichnet, dass** der Druckspeicher (20) einen Druck aufweist, der mindestens das Doppelte des zweiten Drucks (p2) beträgt.

## Claims

1. Method for continuously desalinating water by reverse osmosis, especially for desalinating sea water, wherein
- salt water (10) is introduced under a first pressure (p1) by means of a delivery pump (1) into a pressure compensating device (2) having a piston/cylinder device,
- salt water (11) is continuously introduced from the pressure compensating device (2), at a second, increased pressure (p2), into a membrane module (3) and is separated therein by means of a membrane (6) into desalinated water (12) and concentrated salt water (13),
- the concentrated salt water (13) discharged from the membrane module (3) is continuously introduced, under approximately the second pressure (p2), into the pressure compensating device (2) and is used there to act with approximately the second pressure (p2) on the salt water (10) introduced into the pressure compensating device (2) and to introduce the salt water (11) into the membrane module (3), and
- a continuous flow of the salt water (11) introduced into the membrane module (3) is maintained over the surface of the membrane (6) by means of salt water discharged from a reservoir (15; 403, 20),
**characterised in that** the reservoir (15; 403; 20) has a piston reservoir (403) with a piston (303), wherein at the front side of the piston there is an inlet chamber (203) connected to the salt water outlet of the pressure compensating device (2) and to the salt water inlet of the membrane module (3) and, at the rear side of the piston, there is an outlet chamber (103) connected to the outlet of the concentrated salt water (13) of the membrane module (3) and a pressure chamber (503) connected to a pressure reservoir (20), and that the surface area ratios of the rear side of the piston and the pressure of the pressure reservoir (20) are set such that at specified times a pressure that is greater than the second pressure (p2) of the salt water (11) discharged from the pressure compensating device (2) is produced in the inlet chamber (203).

2. Method according to claim 1,
**characterised in that** the pressure compensating device (2) has two piston/cylinder devices (401, 402) which operate in opposite phase relationship and which each have a respective piston (301, 302), and that the reservoir (15; 403; 20) passes water from the reservoir (15; 403; 20) into the membrane module (3) upon a change in the direction of movement of the pistons (301, 302).

3. Method according to claim 1 or 2,
**characterised in that** the pressure for discharging the water from the reservoir (15; 403; 20) is produced by combination of the approximately second pressure (p2) of the concentrated salt water (13) discharged from the membrane module (3) and an assisting pressure from a pressure reservoir (20).

4. Apparatus for continuously desalinating water by reverse osmosis, especially for desalinating sea water, comprising
- a delivery pump (1) for introducing salt water (10) under a first pressure (p1) into a pressure compensating device (2),
- a membrane module (3) for separating introduced salt water (11) into desalinated water (12) and concentrated salt water (13),
- a pressure compensating device (2), having a piston/cylinder device, for continuously feeding the salt water (11) under a second, increased pressure (p2) into the membrane module (3) and for discharging the concentrated salt water (13), and
- a reservoir (15; 403, 20) for maintaining a continuous flow of the salt water (11) introduced into the membrane module (3) over the surface of the membrane (6) by discharging water from the reservoir (15; 403; 20) into the membrane module (3),
**characterised in that** the reservoir (15; 403; 20) has a piston reservoir (403) with a piston (303), wherein at the front side of the piston there is an inlet chamber (203) connected to the salt water outlet of the pressure compensating device (2) and to the salt water inlet of the membrane module (3) and, at the rear side of the piston, there is an outlet chamber (103) connected to the outlet of the concentrated salt water (13) of the membrane module (3) and a pressure chamber (503) connected to a pressure reservoir (20), and that the surface area ratios of the rear side of the piston and the pressure of the pressure reservoir (20) are set such that at predetermined times a pressure that is greater than the second pressure (p2) of the salt water (11) discharged from the pressure compensating device (2) is produced in the inlet chamber (203).

5. Apparatus according to claim 4,
**characterised in that** the pressure compensating device (2) has two piston/cylinder devices (401, 402) which operate in opposite phase relationship and which each have a respective piston (301, 302), and that the reservoir (15; 403; 20) passes water out of the reservoir (15; 403; 20) into the membrane module (3) upon a change in the direction of movement of the pistons (301, 302).

6. Apparatus according to claim 4 or 5,
**characterised in that** the piston (303) is of a configuration such that the pressure prevailing in the pressure chamber (503) is able to act on approximately a quarter of the surface area of the rear side of the piston and the pressure prevailing in the outlet chamber (103) is able to act approximately on three quarters of the surface area of the rear side of the piston.

7. Apparatus according to claim 4, 5 or 6,
**characterised in that** the pressure reservoir (20) has a pressure that is at least double the second pressure (p2).

## Revendications

1. Procédé pour dessaler en continu de l'eau par osmose inverse, en particulier pour dessaler de l'eau de mer, dans lequel
- de l'eau salée (10) est introduite sous une première pression (p1) au moyen d'une pompe d'alimentation (1) dans un dispositif d'équilibrage de pression (2) présentant un dispositif piston/cylindre,
- de l'eau salée (11) est introduite en continu depuis le dispositif d'équilibrage de pression (2) avec une seconde pression accrue (p2) dans un module de membrane (3) et y est séparée au moyen d'une membrane (6) en eau dessalée (12) et en eau salée concentrée (13),
- l'eau salée concentrée (13) évacuée hors du module de membrane (3) est introduite en continu sous à peu près la seconde pression (p2) dans le dispositif d'équilibrage de pression (2) et y est utilisée en vue de la mise sous à peu près la seconde pression (p2) de l'eau salée (10) introduite dans le dispositif d'équilibrage de pression (2) et en vue de l'introduction de l'eau salée (11) dans le module de membrane (3), et
- un écoulement continu de l'eau salée (11) introduite dans le module de membrane (3) est maintenu sur la surface de membrane de la membrane (6) au moyen d'eau salée évacuée hors d'un accumulateur (15 ; 403, 20),
**caractérisé en ce que** l'accumulateur (15 ; 403 ; 20) présente un accumulateur à piston (403) comportant un piston (303), qui présente, au niveau de la face avant du piston, une chambre d'entrée (203) reliée avec la sortie d'eau salée du dispositif d'équilibrage de pression (2) et avec l'entrée d'eau salée du module de membrane (3) et, au niveau de la face arrière du piston, une chambre de sortie (103) reliée avec la sortie de l'eau salée concentrée (13) du module de membrane (3), ainsi qu'une chambre de pression (503) reliée avec un accumulateur de pression (20), et **en ce que** les rapports de sections de la face arrière du piston et la pression de l'accumulateur de pression (20) sont ajustés de telle façon qu'à des moments prédéfinis, une pression est générée dans la chambre d'entrée (203), laquelle est plus grande que la seconde pression (p2) de l'eau salée (11) évacuée hors du dispositif d'équilibrage de pression (2).

2. Procédé selon la revendication 1,
**caractérisé en ce que** le dispositif d'équilibrage de pression (2) présente deux dispositifs piston/cylindre (401, 402) fonctionnant en opposition, comportant respectivement un piston (301, 302), et **en ce que** l'accumulateur (15 ; 403 ; 20) conduit de l'eau hors de l'accumulateur (15 ; 403 ; 20) dans le module de membrane (3) en cas de changement de sens de mouvement des pistons (301, 302).

3. Procédé selon la revendication 1 ou 2,
**caractérisé en ce que** la pression destinée à évacuer l'eau hors de l'accumulateur (15 ; 403 ; 20) est générée via combinaison d'à peu près la seconde pression (p2) de l'eau salée concentrée (13) évacuée hors du module de membrane (3) et d'une pression d'assistance à partir d'un accumulateur de pression (20).

4. Dispositif pour dessaler en continu de l'eau par osmose inverse, en particulier pour dessaler de l'eau de mer, comportant
- une pompe d'alimentation (1) destinée à l'introduction d'eau salée (10) sous une première pression (p1) dans un dispositif d'équilibrage de pression (2),
- un module de membrane (3) destiné à la séparation d'eau salée introduite (11) en eau dessalée (12) et en eau salée concentrée (13),
- un dispositif d'équilibrage de pression (2) présentant un dispositif piston/cylindre destiné à amener en continu l'eau salée (11) sous une seconde pression accrue (p2) dans le module de membrane (3) et à évacuer l'eau salée concentrée (13), et
- un accumulateur (15 ; 403, 20) destiné à maintenir un écoulement continu de l'eau salée (11) introduite dans le module de membrane (3) sur la surface de membrane de la membrane (6) via évacuation d'eau hors de l'accumulateur (15 ; 403 ; 20) dans le module de membrane (3),
**caractérisé en ce que** l'accumulateur (15 ; 403 ; 20) présente un accumulateur à piston (403) comportant un piston (303), qui présente, au niveau de la face avant du piston, une chambre d'entrée (203) reliée avec la sortie d'eau salée du dispositif d'équilibrage de pression (2) et avec l'entrée d'eau salée du module de membrane (3) et, au niveau de la face arrière du piston, une chambre de sortie (103) reliée avec la sortie de l'eau salée concentrée (13) du module de membrane (3), ainsi qu'une chambre de pression (503) reliée avec un accumulateur de pression (20), et **en ce que** les rapports de sections de la face arrière du piston et la pression de l'accumulateur de pression (20) sont ajustés de telle façon qu'à des moments prédéfinis, une pression est générée dans la chambre d'entrée (203), laquelle est plus grande que la seconde pression (p2) de l'eau salée (11) évacuée hors du dispositif d'équilibrage de pression (2).

5. Dispositif selon la revendication 4,
**caractérisé en ce que** le dispositif d'équilibrage de pression (2) présente deux dispositifs piston/cylindre (401, 402) fonctionnant en opposition, comportant respectivement un piston (301, 302), et **en ce que** l'accumulateur (15 ; 403 ; 20) conduit de l'eau hors de l'accumulateur (15 ; 403 ; 20) dans le module de membrane (3) en cas de changement de sens de mouvement des pistons (301, 302).

6. Dispositif selon la revendication 4 ou 5,
**caractérisé en ce que** le piston (303) est conçu de telle façon que la pression régnant dans la chambre de pression (503) peut agir sur environ un quart de la surface de la face arrière du piston et la pression régnant dans la chambre de sortie (103) approximativement sur trois quarts de la surface de la face arrière du piston.

7. Dispositif selon la revendication 4, 5 ou 6,
**caractérisé en ce que** l'accumulateur de pression (20) présente une pression qui s'élève au moins au double de la seconde pression (p2).
